# EUROPEAN PATENT SPECIFICATION

(11) **EP 3 827 470 B1**
(45) Date of publication and mention of the grant of the patent: **11.09.2024**
(21) Application number: 19748765.5
(22) Date of filing: 23.07.2019
(51) Int. Cl.: H01M 4/131, H01M 4/525, H01M 4/505, H01M 4/62, H01M 4/04, H01M 4/1391, H01M 10/0525, H01M 10/052

(54) **ECO-FRIENDLY AQUEOUS PROCEDURE TO OBTAIN HIGH VOLTAGE CATHODE FOR LI-ION BATTERIES**
UMWELTFREUNDLICHES WÄSSRIGES VERFAHREN ZUR HERSTELLUNG EINER HOCHSPANNUNGSKATHODE FÜR LI-IONEN-BATTERIEN
PROCÉDURE AQUEUSE RESPECTUEUSE DE L'ENVIRONNEMENT POUR OBTENIR UNE CATHODE HAUTE TENSION POUR BATTERIES LITHIUM-ION

(30) Priority: 24.07.2018 EP 18382557
(43) Date of publication of application: 02.06.2021
(73) Proprietor: Fundacion Cidetec, 20014 Donostia-San Sebastián (ES)
(72) Inventor: EGUIA BARRIO, Aitor, 20014 DONOSTIA-SAN SEBASTIÁN (ES); MEATZA FERNÁNDEZ, Iratxe, 20014 DONOSTIA-SAN SEBASTIÁN (ES); URDAMPILLETA GONZALEZ, Idoia, 20014 DONOSTIA-SAN SEBASTIÁN (ES); BENGOECHEA GORROCHATEGUI, Miguel, 20014 DONOSTIA-SAN SEBASTIÁN (ES)
(74) Representative: ZBM Patents - Zea, Barlocci & Markvardsen
(86) International application number: PCT/EP2019/069740
(87) International publication number: WO 2020/020856

(56) References cited:
- EP-A2- 3 044 822
- JP-A- 2015 176 744
- TANABE TOYOKAZU ET AL: "Preparation of Water-Resistant Surface Coated High-Voltage LiNi0.5Mn1.5O4Cathode and Its Cathode Performance to Apply a Water-Based Hybrid Polymer Binder to Li-Ion Batteries", ELECTROCHIMICA ACTA,, vol. 224, 15 December 2016 (2016-12-15), pages 429 - 438, XP029874298, ISSN: 0013-4686, DOI: 10.1016/J.ELECTACTA.2016.12.064

## Description

### Technical Field

The present disclosure relates to the field of rechargeable batteries. In particular, it relates to a cathode comprising a cathode active material, a conductive additive, a water soluble thickener, and a waterborne polymer binder, as well to a process for its preparation, and to a Li-ion battery comprising said cathode.

### Background Art

Environmentally friendly, low-cost, safe lithium-ion batteries (LIBs) with increased energy and power densities are much in demand to boost the advance of sustainable alternative sources of energy and transport. The main target is to promote mass marketing of hybrid electric (HEVs) and full electric vehicles (EVs) by increasing LIB energy density over 250 Wh kg⁻¹, thus extending the drive range of such vehicles to consumer acceptable values.

Approaches to increase battery energy density include the use of high-voltage and/or high-capacity cathode materials. LiNiₓMn₂₋ₓO₄ (x = 0.2, 0.3, 0.4, 0.5) spinel is one of the most promising cathode materials for next-generation high-energy LIBs because of the high nominal operating voltage due to the reversible oxidation of Ni²⁺ to Ni³⁺ and Ni³⁺ to Ni⁴⁺ with lithium ion de-intercalation at 4.70-4.75 V *vs* Li⁺/Li and a theoretical specific capacity of 146.7 mAh g⁻¹. The combination with a graphite anode or other high-capacity anode might match specific energies higher than 200 Wh kg⁻¹ in full cell configuration. Despite its appealing properties due to the avoidance of cobalt, i.e., low cost, environmental friendliness and good safety, the major concern that limits the use of LiNiₓMn₂₋ₓO₄ is its high reactivity in the fully charged state.

Recent studies have demonstrated that the most critical barrier for the commercialization of high-voltage spinel Li-ion batteries is electrolyte decomposition and concurrent degradation reactions at electrode/electrolyte interfaces, which results in poor cycle life for LiNiₓMn₂₋ₓO₄/graphite full cells. The selection of appropriate cell components that are stable at high operating potentials is crucial for the stability of LiNiₓMn₂₋ₓO₄ electrodes over cycling. Even the electrodes' binder, albeit electrochemically inactive, plays an important role in affecting the capacity and cycle life of LiNiₓMn₂₋ₓO₄ based electrodes.

With a typical discharge voltage of 4.7 V (vs. Li⁺/Li), the major charge/discharge reactions of LiNi_{0.5}Mn_{1.5}O₄ (LNMO) take place up to ~4.9 V (*vs.* Li⁺/Li), which would be an advantage if it were not beyond the stability potential (~4.5 V) of conventional electrolyte. The electrolyte is not stable against oxidation at such high potential. Therefore, it decomposes irreversibly with gas generation and leading to a significant capacity fade and poor cycle life. In addition, the Mn³⁺ in LNMO is inclined to form Mn²⁺ during cycling due to its Jahn-Teller distortion. The Mn²⁺ ion is reported to have a tendency to dissolve into the electrolyte and be further deposited on the surface of the anode, with the deposition subsequently increasing the impedance of the battery due to more resistive interfaces and causing potential energy losses. Recently, Benedek and Thackeray proposed that trace amounts of HF in the electrolyte may also cause Mn dissolution. It can be explained because the resulting HF can accelerate Mn and Ni dissolution from LiNi_{0.5}Mn_{1.5}O₄, and consequently various reaction products, such as LiF, MnF₂, NiF₂, and polymerized organic species, are found on the surface of LiNi_{0.5}Mn_{1.5}O₄ electrode. To overcome this common problem, most of authors carried out the surface modification of the material in order to promote the stabilization of the interface between the electrolyte and electrode. Recently, various materials have been investigated as possible coatings on the LiNi_{0.5}Mn_{1.5}O₄ electrodes. Metal oxide and polymer coatings have been employed as possible materials to prevent manganese dissolution. Carbon has been explored as an additive to both prevent dissolution, as well as increase electronic conductivity. Pieczonka et al. (J. Phys. Chem. C 117 (2013) 15947- 15957) reported Mn and Ni dissolution behaviors. Tanabe et al. (Electrochimica Acta, 258 (2017) 1348-1355) showed that the cathode surface coating is important for inhibiting the degradation of cathode performance.

On the other hand, recently, water-soluble and aqueous polymers (waterborne polymers) have attracted much attention as binders for lithium ion batteries (LIBs) because of the need for low-cost materials and environmentally compatible electrode fabrication processes. The upper potential applicable for the charge/discharge reaction of LiNi_{0.5}Mn_{1.5}O₄, 4.9 V (*vs.* Li⁺/Li) is suitable to test the electrochemical oxidation resistance of the water-based polymer binders which are required to possess a high resistance to electrochemical oxidation. However, metal oxide cathodes containing a high percentage of Ni and Mn such as LiNi_{0.5}Mn_{1.5}O₄ and also layered oxides such as Li[NiₓMn_{y}Co_{1-x-y}]O₂ where x>0.5 (e.g. NMC532, NMC622, NMC811) tend to suffer from chemical damage which is caused by the contact with water, i.e., Ni³⁺ ion on the cathode material surface is reduced with H₂O to form Ni²⁺ ion. As a result of this reduction, lithium carbonate and lithium hydroxide are formed on the cathode material surface and dissolved into aqueous solutions. This leads to the corrosion of aluminum current collectors, especially in the case of water-based cathode formulations. Corrosion of the aluminum substrate can influence negatively the cell performance, since it affects the interface between the current collector and the coating, e.g. by creating a passivation layer between them. Additionally, the transition metals dissolution or leaching from the active material in contact with water, can reduce the specific capacity and thus the electrochemical performance of the electrode.

Recently, water-soluble binders such as CMC used in LNMO electrodes have been reported as improving the electrochemical performance of cathodes. The uniform protective film formed on the cathode surface and the good dispersion of composite electrode components should reduce the contact between LNMO and the electrolyte, thus effectively suppressing Ni and Mn dissolution upon 100 cycles even at high temperature. Nevertheless, the exclusive use of CMC as binder caused cracks during the drying process, and thus, a bad adhesion with the substrate.

US9331331 discloses the preparation of a cathode electrode at laboratory scale by coating onto aluminum current collector with a slurry that includes a cathode active material, such as LNMO, a conductive additive, such as carbon black, and a water-based binder consisting of a mixture of CMC and an acrylic polymer. As an example, the process of cathode slurry preparation includes: (1) mixing, in a non-bubbling kneader for example, a mixture of 90 wt% LNMO with an average particle size of 5 microns and 5 wt% carbon black at 150 rpm for 15 minutes; (2) adding 2 wt% CMC, 3 wt% SX-50 polyacrylic and sufficient water to achieve a final solid content around 50-55 wt%; and (3) mixing the final mixture at 150 rpm for another 15 minutes. It is stated that the LNMO coating shows no cracking and has good adhesion on the Al substrate at loadings up to 4.0 mg/cm² (i.e. 0.5 mAh/cm²). However, a significant amount of manganese and nickel is expected to be dissolved in the slurry water, particularly when trying to scale-up the process to get a commercial battery, with the resulting loss of cathode active material and reduction of cathode capacity.

One of the main challenges of working with this type of cathode in aqueous medium versus the conventionally produced in organic medium is how to solve the problem of the dissolution in water of manganese and nickel metals during the manufacturing process, while getting a slurry providing a homogeneous coating. The electrode preparation process seems to be crucial for the electrochemical performance of in-water-made LiNiₓMn₂₋ₓO₄ electrodes, particularly when real and effective industrial batteries are being manufactured.

In view of what is described above, the provision of industrially scalable processes for the preparation of cathodes without organic volatile compounds as solvents, which effectively avoid dissolution of the cathode active material, these allowing the manufacture of batteries with better performances, would represent a huge step forward in the development of next-generation energy storage devices.

### Summary of Invention

The inventors have realized that by carrying out the process disclosed herein, which involves a specific order of and specific times for the incorporation of the different components to form an aqueous slurry that will serve to obtain an active layer of a cathode, allows obtaining cathodes that can be used for the manufacture of batteries having better performances, particularly having an improved specific capacity. Particularly, the inventors have found that by preparing a predispersion of carbon black as a conductive material in an aqueous solution of a water soluble thickener (such as a CMC aqueous solution), subsequently, adding for a limited time a cathode active material (such as LiNiₓMn₂₋ₓO₄ wherein x is 0.2, 0.3, 0.4, or 0.5), and finally, adding for a limited time a waterborne polymer binder (such as an acrylic polymer binder) to the dispersion, a slurry allowing obtaining a cathodic coating with a particularly high homogeneity and high loading is obtained, without any detriment to the mechanical and/or electrochemical properties of the electrode. Particularly, when a cathode active material containing Ni and Mn is used, the process allows minimizing manganese and nickel dissolution. As a consequence, a cathode with a particularly good electrochemical performance and which is suitable for the manufacture of a battery can be obtained.

The present disclosure relates to a cathode for a Li-ion battery comprising a conductive substrate in the form of a foil having two sides, wherein at least one of the two sides is coated with an active layer, wherein the active layer comprises a water soluble thickener, a conductive additive, a waterborne polymer binder and an amount equal to or higher than 10 mg/cm²/side of a cathode active material, wherein the cathode active material is LiNiₓMn₂₋ₓO₄ wherein x is selected from 0.2, 0.3, 0.4, and 0.5, and the cathode has a specific capacity from 120 to 147 mAh/g-active material, and is capable to maintain an average discharge voltage of 4.7 V versus Li/Li⁺, tested at C/5 rate.

A first aspect of the invention relates to a process for the preparation of a cathode for a Li-ion battery comprising a conductive substrate in the form of a foil having two sides, wherein at least one of the two sides is coated with an active layer, wherein the active layer comprises an amount equal to or higher than 10 mg/cm² of a cathode active material, the process comprising:
a) preparing a first aqueous dispersion by dissolving from 2 to 3 wt% of water soluble thickener in water and then adding under stirring from 4 to 6 wt% of a conductive additive and;
b) adding from 89 to 91 wt% of a cathode active material to the first aqueous dispersion under stirring in order to obtain a second aqueous dispersion, wherein the cathode active material is LiNiₓMn₂₋ₓO₄ wherein x is selected from 0.2, 0.3, 0.4, and 0.5;
c) adding from 2 to 3 wt% of a waterborne polymer binder to the second dispersion under stirring in order to obtain a slurry;
d) coating with the slurry at least one side of the conductive substrate to obtain a coated conductive substrate; and
e) drying the coated conductive substrate in order to form an active layer on at least one side of the conductive substrate;
wherein water added in steps (a), (b) and (c) is such that the slurry in step (c) has a final solid content from 40 to 55 wt%; and wherein the cathode active material is in contact with water in both step b) and step c) for a time such that nickel is dissolved in an amount equal to or lower than 0.27 ppm, and manganese is dissolved in an amount equal to or lower than 0.14 ppm.

By carrying out the mentioned steps in the specified times, the formation of aggregates and the loss of specific capacity of the cathode active material due to metal dissolution are avoided.

A second aspect of the invention relates to cathode obtainable by the process as defined herein above and below.

Surprisingly, as can be seen from the examples, by integrating several of these cathodes, a cell based on graphite/cathode active material in pouch design having a high energy density and charge stability up to 4.9 V, showing particularly good performance during cycling, can be manufactured.

A third aspect of the invention relates to a Li-ion battery comprising a cathode as defined above, an anode, a separator, and a suitable electrolyte interposed between the cathode and the anode.

### Brief Description of Drawings

Fig. 1 shows the SEM images of an electrode prepared in aqueous media using LiNi_{0.5}Mn_{1.5}O₄ as cathode active material with 91 wt% LNMO, 4 wt% carbon black, 2 wt% CMC, and 3 wt% polyacrylate-type waterborne binder latex with 500 (a), 1000 (b), 2000 (c) and 10000 (d) magnifications.
Fig. 2 shows the rate capability of the best performing LNMO cathodic electrode sample, S6, at C/5, C/2, 1C, 2C, 5C, 8C and 10C rates.
Fig. 3 shows the galvanostatic charge-discharge at different rates: C/20, C/2 and 1C (a) and rate capability of a graphite/LiNi_{0.5}Mn_{1.5}O₄ in CR2025 coin cell format with the optimum formulation (S10) having the following composition: LiNi_{0.5}Mn_{1.5}O₄ 89.5 wt%, carbon black 6.0 wt%, carboxymethyl cellulose 2.5 wt% and binder 2.0 wt%.
Fig. 4 shows the electrochemical tests of a 1Ah pouch cell: formation cycles by galvanostatic charge-discharge at C/20 and C/10 rate (a), power test at increasing current pulses of 30 s up to 3.4 A (b), and cycle-life at 0.5 A (c).

### Detailed description of the invention

For the sake of understanding, the following definitions are included and expected to be applied throughout description, claims and drawings.

As used herein, the term "loading" (of an electrode) refers to the amount of cathode active material per unit area of an electrode. Loading is measured in mg/cm² or mAh/cm² and is typically proportional to thickness before calendering. In the context of the present disclosure, as an example, the cathode active material is LiNiₓMn₂₋ₓO₄ wherein x is selected from 0.2, 0.3, 0.4, and 0.5, particularly LiNi_{0.5}Mn_{1.5}O₄ (LNMO).

As used herein, the term "waterborne" means that the binder is capable to form a water solution or dispersion in a solvent or carrier fluid mainly comprising water.

As used herein, "calendering" refers to a process of smoothing and compressing a material during production by passing a single continuous sheet through a number of pairs of rolls at room temperature or higher.

The terms "particle size", as used herein, is in terms of diameter irrespective of the actual particle shape. The term "diameter", as used herein, means the equivalent sphere diameter, namely the diameter of a sphere having the same diffraction pattern, when measured by laser diffraction, as the particle. The diameter of particles can be measured by field emission scanning electron microscope (FE-SEM, ULTRA plus ZEISS). LNMO based electrode samples for SEM images were placed onto conducting adhesive carbon tape pasted to the corresponding SEM sample holder. Average size and size distribution can be calculated by measuring the dimensions of a representative amount of particles by this technique using ZEISS software SMARTSEM.

The term "C-rate" as used herein, refers to a measure of the rate at which a battery is discharged relative to its maximum capacity. A 1C rate means that the discharge current will discharge the entire battery in 1 hour.

The term "specific capacity" refers to the amount of charge stored and delivered (A-h) for a weight of the electrode active material, typically expressed in mAh/g, wherein the g relates to the g of active material.

The term "percentage (%) by weight" of the components of the cathode of one or more of these components in the solutions or slurry obtained to prepare the cathode refers to the percentage of each one of the ingredients in relation to the total weight of the active layer, unless otherwise stated. As an example, the from 2 to 3 wt% of water soluble thickener and the from 4 to 6 wt% of a conductive additive used to prepare a first aqueous dispersion; the from 89 to 91 wt% of a cathode active material added to the first aqueous dispersion to obtain a second aqueous dispersion; and the from 2 to 3 wt% of a waterborne polymer binder added to the second dispersion in order to obtain a slurry, relate to the total weight of water soluble thickener, conductive additive, cathode active material, and waterborne polymer binder.

As used herein, the indefinite articles "a" and "an" are synonymous with "at least one" or "one or more." Unless indicated otherwise, definite articles used herein, such as "the," also include the plural of the noun.

As mentioned above, the present disclosure relates to cathode for a Li-ion battery comprising a conductive substrate in the form of a foil having two sides, wherein at least one of the two sides is coated with an active layer, wherein the active layer comprises an amount equal to or higher than 10 mg/cm²/side of a cathode active material, wherein the cathode active material is LiNiₓMn₂₋ₓO₄ wherein x is selected from 0.2, 0.3, 0.4, and 0.5, and the cathode has a specific capacity from 120 to 147 mAh/g-active material, and is capable to maintain an average discharge voltage of 4.7 V versus Li/Li⁺, tested at C/5 rate.

In an embodiment, the conductive substrate is coated on both sides with the active layer.

In another embodiment, optionally in combination with one or more features of the particular embodiments defined above, the amount of cathode active material is from 10 to 20 mg/cm²/side.

In another embodiment, optionally in combination with one or more features of the particular embodiments defined above, the active layer does not comprise any Li salt additive (such as lithium difluorophosphate or lithium monofluorophosphate) apart from the cathode active material.

In another embodiment of the cathode of the present disclosure, optionally in combination with one or more features of the particular embodiments defined above, the cathode active material is LiNiₓMn₂₋ₓO₄ wherein x is selected from 0.2, 0.3, 0.4, and 0.5, particularly LNMO, and the cathode has a specific capacity from 120 to 147 mAh/g-active material, and is capable to maintain an average discharge voltage of 4.7 V versus Li/Li⁺ at C/5 rate.

As mentioned above, the active layer further comprises a water soluble thickener, a conductive additive, and a waterborne polymer binder. Particularly, the water soluble thickener is in an amount from 2 to 3 wt%, the conductive additive is in an amount from 4 to 6 wt%, the cathode active material is in an amount from 89 to 91 wt%, the waterborne polymer binder is in an amount from 2 to 3 wt% related to the total weight of water soluble thickener, conductive additive, cathode active material, and waterborne polymer binder.

In another embodiment, optionally in combination with one or more features of the particular embodiments defined above, the waterborne polymer binder is a binder having a Tg lower than 120 °C, particularly from -60 °C to 120 °C or a Tm lower than 120 °C, particularly from 60 °C to 120 °C, and being stable above a voltage of 4.6 V vs Li/Li⁺. More particularly, the waterborne polymer binder is selected from the group consisting of polyacrylate, polymethacrylate, fluorinated polyacrylate, poly-N,N-dimethylacrylamide, poly(acrylonitrile-co-acrylamide) polymer, polyacrylic acid (PAA), poly vinyl acetate (PVAc), polylactic acid (PLA), polysuccinic acid, polyformic acid, polyvinylsulfonic acid;, fluor-acrylic copolymer (ACP), vinyl-acrylic copolymer, (meth)acrylic polymer binder and copolymers and mixtures thereof, or salts such as poly(acrylic acid sodium) (NaPAA), sodium polyacrylate, potassium polyacrylate, lithium polyacrylate;. Particularly, the waterborne binder is an acrylic polymer.

In another embodiment, optionally in combination with one or more features of the particular embodiments defined above, the water soluble thickener is selected from the group consisting of polysaccharides such as chitosan, carboxymethyl chitosan, cellulose, sodium carboxymethyl cellulose, and sodium alginate; xanthan gum, guar gum, and gelatin. Particularly, the water soluble thickener is carboxymethylcellulose.

In another embodiment, optionally in combination with one or more features of the particular embodiments defined above, the conductive additive is carbon black.

Also as mentioned above, a first aspect of the invention relates to a process for the preparation of a cathode for a Li-ion battery as defined above, the cathode having a loading above 10 mg/cm²/side, the process comprising preparing a first aqueous dispersion of a conductive additive in an aqueous solution of a water soluble thickener; adding a cathode active material to the first aqueous dispersion under stirring in order to obtain a second aqueous dispersion; adding a flexible waterborne binder to the second dispersion under stirring in order to obtain a slurry; coating at least one side of the conductive substrate with the slurry to obtain a coated substrate; and drying the coated substrate in order to form an active cathode layer on the conductive substrate, i.e. in order to obtain the final cathode. The composition of the coating is from 2 to 3 wt% water soluble thickener, from 4 to 6 wt% conductive additive, from 89 to 91 wt% cathode active material, and from 2 to 3 wt% waterborne polymer binder, the weight percentages being with respect to the total weight of water soluble thickener, conductive additive, cathode active material, and waterborne polymer binder. Usually, the final pH of the obtained slurry is from 8 to 9.

In an embodiment of the process of the present disclosure, water added in steps (a), (b) and (c) is such that the slurry in step (c) has a final solid content from 45 to 50 wt%, particularly of 45 wt%.

In another embodiment, optionally in combination with one or more features of the particular embodiments defined above, of the process of the present disclosure, the amount of cathode active material is from 10 to 20 mg/cm²/side.

In another embodiment, optionally in combination with one or more features of the particular embodiments defined above, the process does not comprise adding any Li salt additive (such as lithium difluorophosphate or lithium monofluorophosphate) in addition to the cathode active material, in order to compensate losses of the later due to its partial dissolution in water.

In another embodiment, optionally in combination with one or more features of the particular embodiments defined above, the conductive substrate is coated on both sides with the active layer.

Examples of conductive substrate suitable for the preparation of the cathode of the present disclosure include, without being limited to, aluminium foil 99.5% or carbon-coated aluminum foil, stainless steel or other metal foils, and meshes with high electrical conductivity and stable up to 5V vs Li⁺/Li.

The preparation of the first aqueous dispersion is carried out by adding the conductive additive, such as carbon black, to the water soluble thickener aqueous solution, such as a CMC aqueous solution. The dispersion is obtained under stirring for an appropriate time, generally to allow the homogeneous dispersion of the conductive additive, which means that there is no detrimental particle agglomeration. As as example, a time of up to 2 hours is enough to obtain a homogeneous dispersion.

Thus, in another embodiment, optionally in combination with one or more features of the particular embodiments defined above, the dispersion of step a) is a homogeneous dispersion, which means that the dispersion does not contain agglomerated particles.

The term "agglomerated particles" means two or more particles that form an agglomerate. The term "non agglomerated particles" means two or more particles that are not physically associated with each other.

Stirring in step b), i.e. in the preparation of the second aqueous dispersion after the addition of the cathode active material, can be performed for up to 3 hours. Stirring in step c), i.e. after adding the flexible waterborne binder (such as acrylic polymer) to the second dispersion, can be performed for up to 1 hour. Thus, as an example, the time that the cathode active material can be in contact with water is of up to 4 hours. This time can vary depending on the process scale and should be taken only as a reference, the important thing being minimizing the dissolution of nickel and manganese from the cathode active material. Thus, the time the cathode active material is in contact with water in the second aqueous dispersion and in the slurry must be limited such that nickel is dissolved in an amount equal to or lower than 0.27 ppm, and manganese is dissolved in an amount equal to or lower than 0.14 ppm. The amount of nickel and manganese dissolved is determined in the final dispersion, i.e. the slurry of step c), that has a final solid content from 40 to 55 wt%, from 45 to 50 wt% or of 45 wt%. The measurements of the solution recovered after filtering the solid were carried out by Inductively Coupled Plasma Emission Spectroscopy (ICP).

In a particular embodiment, optionally in combination with one or more features of the particular embodiments defined above, the process does not comprise any powder washing step with water, particularly with water at a pH from 8 to 10.

Drying of step e) is carried out in order to remove the solvent. In an embodiment of the process disclosed above, optionally in combination with one or more features of the particular embodiments defined above, the drying of the cathode active layer is carried out at a temperature from 60 to 80 °C, particularly to 70 °C, for 3 to 15 min, particularly for less than 10 min. Particularly, drying is carried out at 80 °C for 6 min by air convection. The drying can be carried out in an oven such as a convection oven.

By carrying out the process at the mentioned temperatures and in such very short drying times not only no detrimental effect on the properties of the active layer of the final cathode is produced (such as in terms of cohesion and adhesion of the active layer to the substrate), but a cathode with a particular good electrochemical performance is obtained. Thus, the process disclosed herein allows obtaining a cathode active layer made of a material having a singular structure (in terms of, for instance, homogeneity, particle size, and morphology), which provides the cathode with particularly good electrochemical properties.

As an example, the cathode active material has a particle size from 1 to 10 µm, particularly from 1-4 µm.

In another embodiment of the process of the present disclosure, optionally in combination with one or more features of the particular embodiments defined above, the waterborne polymer binder is a binder having a Tg lower than 120 °C, particularly from -60 °C to 120 °C or a Tm lower than 120 °C, particularly from 60 °C to 120 °C, and being stable above a voltage of 4.6 V vs Li⁺/Li. More particularly, the waterborne polymer binder is selected from the group consisting of polyacrylate, polymethacrylate, fluorinated polyacrylate, poly-N,N-dimethylacrylamide, poly(acrylonitrile-co-acrylamide) polymer, polyacrylic acid (PAA), poly vinyl acetate (PVAc), polylactic acid (PLA), polysuccinic acid, polyformic acid, polyvinylsulfonic acid; fluor-acrylic copolymer (ACP), vinyl-acrylic copolymer, (meth)acrylic polymer binder, and copolymers and mixtures thereof or salts such as poly(acrylic acid sodium) (NaPAA), sodium polyacrylate, potassium polyacrylate, lithium polyacrylate;. Particularly, the waterborne binder is an acrylic polymer.

In another embodiment, optionally in combination with one or more features of the particular embodiments defined above, the cathode active material is LiNiₓMn₂₋ₓO₄ wherein x is selected from 0.2, 0.3, 0.4, and 0.5. Particularly, the cathode active material is LiNi_{0.5}Mn_{1.5}O₄ (LNMO).

In another particular embodiment, optionally in combination with one or more features of the particular embodiments defined above, the weight ratio of a water soluble thickener to waterborne binder is from 0.6:1 to 1:1.5. Particularly, from 0.7:1 to 1:1. More particularly, the water soluble thickener is CMC and the waterborne binder is acrylic polymer.

Once dried the coating layer can be calendered in order to obtain a thin and uniform layer having the appropriate density and porosity, so providing a more reliable battery performance. Additionally, a denser cathode active layer allows same cathode active material to be placed in the battery but in a lower volume, thereby increasing the battery's volumetric energy density.

Thus, in another embodiment, optionally in combination with one or more features of the particular embodiments defined above, the density of the active layer is from 1.9 to 3.0 g/cm³, particularly from 2.0 to 2.5 g/cm³.

A cathode obtainable by the process as defined above also forms part of the invention. All particular embodiments of the process are also particular embodiments of the cathode obtainable by said process.

The cathode obtainable by the process as defined above, particularly coated on both sides, can be used in the manufacture of a Li-ion battery cell as demonstrator of scalable and large-scale (i.e. 40-50 Ah) cells. Thus, as commented above, also forms part of the invention a Li-ion battery comprising a cathode as defined above or obtainable by the process defined above, an anode, a separator, and a suitable electrolyte interposed between the cathode and the anode. Advantageously, the Li-ion battery of the present disclosure can work at current rates up to 5C and recover its nominal capacity after some cycles at high rates.

As an example, the Li-ion battery in form of a pouch cell can comprise from 4 to 33 cathodes, and the same number plus one anode. Particularly, a 1Ah Li-ion battery in form of a pouch cell can be obtained by assembling from 5 to 9 cathodes as defined above, together with the same number plus one of anodes, and interposing between the cathodes and the anodes a suitable polyolefin porous separator and electrolyte.

In the Li-ion battery as defined above, the anode can typically comprises graphite as active material, which can be prepared from waterborne anodic slurries containing 94 wt% graphite or more, up to 2 wt% carbon black, and up to 2 wt% CMC and 2 wt% styrene-butadiene rubber (SBR) latex as binders.

Examples of suitable electrolytes for Li-ion batteries include, without being limited to, 1.0 M LiPF₆ in 1:1, 1:2 or 3:7 ratio of ethylene carbonate (EC) and ethyl methyl carbonate (EMC); 1.0 M LiPF₆ in ethylene carbonate (EC): dimethyl carbonate (DMC); 1.0 M LiPF₆ in ethylene carbonate (EC):propylene carbonate (PC):dimethyl carbonate (DMC);and their combinations with additives such as up to 2 wt% of vinylidene carbonate (VC), fluoroethylene carbonate (FEC) or succinic anhydride (SA).

Throughout the description and claims the word "comprise" and variations of the word, are not intended to exclude other technical features, additives, components, or steps. Furthermore, the word "comprise" encompasses the case of "consisting of". Additional objects, advantages and features of the invention will become apparent to those skilled in the art upon examination of the description or may be learned by practice of the invention. The following examples and drawings are provided by way of illustration, and they are not intended to be limiting of the present invention. Reference signs related to drawings and placed in parentheses in a claim are solely for attempting to increase the intelligibility of the claim, and shall not be construed as limiting the scope of the claim. Furthermore, the present invention covers all possible combinations of particular and preferred embodiments described herein.

### Examples

### Materials

Commercial LiNi_{0.5}Mn_{1.5}O₄ (LNMO, NANOMYTE^{®} SP-10 from NEI Corporation), used to prepare the positive electrode, features the cubic Fd-3m crystallographic structure with a primary particle size of 300 nm, surface area of 2-3 m² g⁻¹ and tap density 1-1.5 g cm⁻¹. Sodium carboxymethyl cellulose (CMC, Walocel^{™} CRT 2000 PA, Dow Wolff Cellulosics), polyacrylate-type waterborne latex (40 wt% sol) and battery grade styrene-butadiene rubber (SBR) latex (TRD102A 48 wt.% sol., JSR micro) were used as binders. Polyacrylate binder latex was used as received. Carbon black C-NERGY^{™} Super C45 (referred herein below simply as C45; Imerys G&C), was used as conductive additive and graphite powder (SGL Carbon) with average particle size (D50) ~5 µm was used as anode active material to prepare negative electrode.

### Slurry and electrode preparation

Waterborne cathodic and anodic slurries were prepared by mechanical stirring using a mechanical blade mixer (RW 20 digital, IKA) and all conducted at room temperature. It should be noted that pH of the slurries (pH ~8.5-9) were not corrected at any time of slurry preparation and electrode coating.

### Characterization

The morphology of the obtained positive electrodes was characterized by field emission scanning electron microscope (FE-SEM, ULTRA plus ZEISS). LNMO based electrode samples for FE-SEM images were placed onto conducting adhesive carbon tape pasted to the corresponding FE-SEM sample holder. Average size and size distribution can be calculated by measuring the dimensions of a representative number of particles by this technique using ZEISS software SMARTSEM.

Inductively Coupled Plasma Emission Spectroscopy (ICP) measurements of Mn and Ni content in water from LNMO were performed using an ICPE-9000 equipment from Shimadzu. The LNMO sample was stirred in water for 4 hours (same time and concentration, g of LNMO/mL H₂O than in slurry preparation) and the dispersion was filtered in order to recover the LNMO powder in contact with water and analyzed.

The electrochemical tests on prepared pouch cells were performed in BASYTEC multichannel cycler (CTS 5 V/5 A).

### Example 1 - Aqueous LiNi_{0.5}Mn_{1.5}O₄ based electrode

A design of experiments was carried out in order to obtain a formulation which can provide highest gravimetric energy density and a good balancing between energy and power capability. Several aqueous slurries of the cathodic electrodes with LiNi_{0.5}Mn_{1.5}O₄ were prepared according to the following composition ranges:
- LiNi_{0.5}Mn_{1.5}O₄ (90 ± 1 %)
- carbon black (5 ± 1 %)
- carboxymethyl cellulose (2.5 ± 0.5 %)
- a polyacrylate binder latex (2.5 ± 0.5 %)

Nine positive electrodes were prepared with the formulations described in Table 1 below.

**Table 1**

| Name | LNMO | Carbon black | CMC | Binder |
|---|---|---|---|---|
| S1 | 91 | 4 | 2 | 3 |
| S2 | 91 | 4 | 3 | 2 |
| S3 | 90 | 4 | 3 | 3 |
| S4 | 91 | 5 | 2 | 2 |
| S5 | 89 | 5 | 3 | 3 |
| S6 | 90 | 6 | 2 | 2 |
| S7 | 89 | 6 | 2 | 3 |
| S8 | 89 | 6 | 3 | 2 |
| S9 | 90 | 5 | 2.5 | 2.5 |

Slurries were prepared following the process of Example 4 below, but for the amount of the components shown in Table 1.

The manufacturing feasibility and mechanical stability of these electrodes were analysed by measuring the viscosity of the prepared slurries and the adhesion by 90° peeling strength of the coated laminates. The obtained results of viscosity at 10/s shear rate confirmed that all the coatings were feasible to be prototyped according to the protocol as can be seen in the measured values represented in Table 2. Nevertheless, the peel strength pointed out some differences between the mixtures (Table 2). In this test, the higher strength value provides the lower risk of delamination and higher adhesion and contact to the current collector. This is a key aspect when the slurry preparation in aqueous media is scaled up.

**Table 2**

| Name | Viscosity at 10/s shear rate (Pa/s) | Peel test (N/m) |
|---|---|---|
| S1 | 9.60 | 36.8 |
| S2 | 27.14 | 15.8 |
| S3 | 20.94 | 17.4 |
| S4 | 13.01 | 24.9 |
| S5 | 20.09 | 32.4 |
| S6 | 15.93 | 29.5 |
| S7 | 13.54 | 44.6 |
| S8 | 19.61 | 31.9 |
| S9 | 24.1 | 30.9 |

Another key aspect in the study of the electrode preparation is the particle size distribution and morphology of the slurry coated surface. This allows checking the degree of mixing the cathode active material mainly with the carbon in order to confirm good electrical conductivity of LiNi_{0.5}Mn_{1.5}O₄.

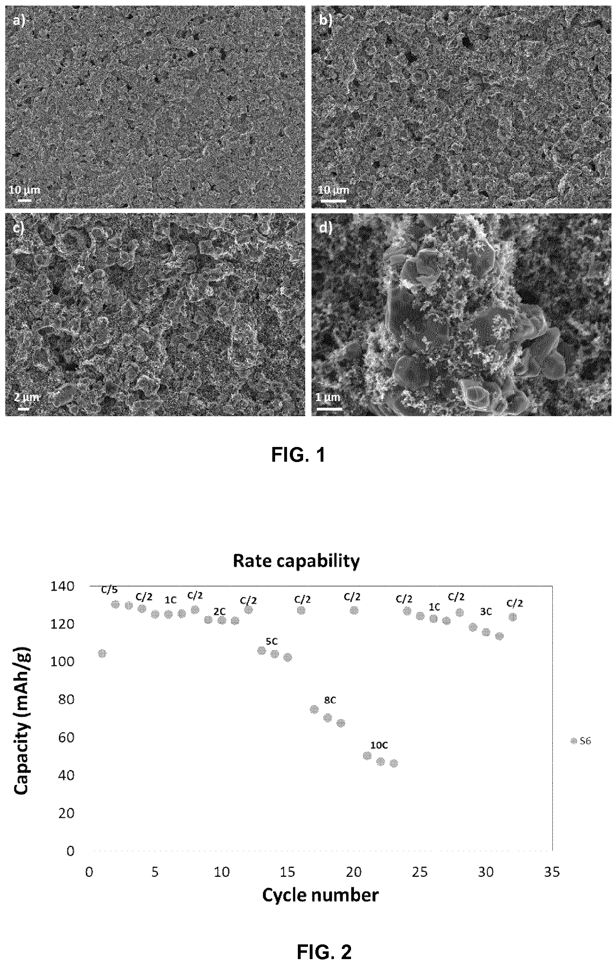

By way of example, Fig. 1a and Fig. 1b show that the cathode active material of S1 is homogenously distributed along the coated electrode layer, while in Figure 1c it can be seen that the particle size of the cathode active material is around 1-4 µm with no presence of aggregates or carbon black agglomerates. In addition, Figure 1d evidences the good contact of nanosized carbon black with the micron sized cathode active material particles in order to provide an effective conducting network. All formulations showed similar features than S1.

### Example 2 - Electrochemical characterization of LNMO cathodes (using lithium as anode) - coin cell

As all the samples fulfill the mechanical requirements for the manufacturing scale up, the electrochemical characterization was carried out on all the samples. The galvanostatic cycling at low rates shows similar results for all the samples S1-S9. After the activation process, LiNi_{0.5}Mn_{1.5}O₄ material exhibits a capacity close to 125 mAh/g-active material, which corresponds to 0.8 Li ions that are reversibly de/intercalated.

According to these results, rate capability tests were performed in order to observe the differences on the loss of capacity by increasing the C-rates upon cycling (Figure 2). The capacity retention showed slightly different behavior depending on the formulation. The main goal of these experiments is to obtain a formulation which can provide a good balancing between energy and power density. This means that electrodes should be able to work at high rates and recover the nominal capacity after some cycles at lower currents (i.e. C/2).

As a result of the design of experiments analysis and a prediction equation obtained from it, optimum formulation (S10) was composed as: LiNi_{0.5}Mn_{1.5}O₄ 89.5 %, carbon black 6 %, carboxymethyl cellulose 2.5 % and polyacrylate binder 2.0 %. Formulation S10 was prepared as shown in Example 4 below.

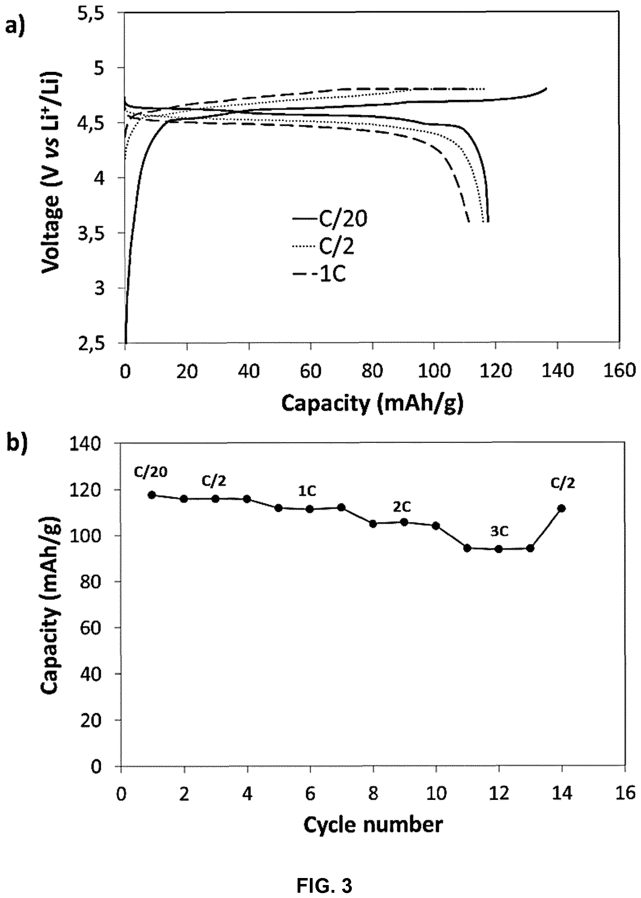

In order to check the predicted performance of the optimum formulation (S10), same experiments were carried out for evaluating the manufacturing feasibility, mechanical stability and electrochemical properties. In the rheology, the viscosity achieved at 10/s shear rate was 16.8 Pa/s while the 90° peeling strength of the cathode showed strength of 29.6 N/m. The formulation obtained from the design of experiments (S10), also exhibited good electrochemical performance as can be seen in Figure 3 which is in agreement with the equation obtained from the DOE. Therefore, after validating that S10 showed better performance than the rest of the samples, this formulation was selected for the assembly of prototype cells.

By ICP measurement of the water solution after maximum LNMO slurry preparation time, in the slurry with an approximately 45 wt% of solid content a very low content of Mn and Ni metals (0.14 ppm and 0.27 ppm, respectively) was determined, therefore evidencing that this procedure minimizes metal dissolution and does not affect the electrochemical performance.

### Example 3 - Electrochemical characterization of LNMO cathodes (using graphite anodic electrode) - coin cell

Cathodic electrodes were prepared with the optimum formulation obtained from the design of experiments previously described. Electrodes with loading of 1.65 mAh/cm² were calendared to a thickness of 75 µm (~2.0 g/cm³). For the full cell configuration, the calculation of the mass balance is of relevant importance. After the calculations, the graphite was calendared up to 40 µm thickness, 1.45 g/cm³ density and a loading of 1.80 mAh/cm².

In the galvanostatic cycling (Figure 3a) it can be seen that the full cell exhibits high voltage and low polarization. The nominal voltage decreased to 4.6 V due to the use of graphite anode in comparison with the cells tested against metallic lithium which exhibited 4.7 V. In addition, the whole practical capacity from the LiNi_{0.5}Mn_{1.5}O₄ (120 mAh/g-active material) was obtained with a coulombic efficiency of 86% on first formation cycle. The rate capability (Figure 3b) showed that LiNi_{0.5}Mn_{1.5}O₄/graphite cell was able to keep the capacity above 100 mAh/g-active material up to 2C rate and was able to recover 112 mAh/g-active material at C/2 after 3C rate tests.

### Example 4 - Preparation of LNMO/graphite pouch cell - 1Ah

### Cathode preparation

Firstly, a CMC binder solution of 208.3 g was prepared (3 wt% in deionized water (DI H₂O)). Then, 15 g of C45 as carbon additive and 39 mL of DI H₂O were added to the solution and the mixture was stirred for 2 h at 800 rpm until obtaining a homogeneous dispersion. Subsequently, 223.75 g of LNMO and 40 mL of DI H₂O were added and further mixed at 800 rpm for 3 h. Finally, 12.5 g of polyacrylate binder latex and 11.5 mL DI H₂O were added to the dispersion by mixing for 1 h at 500 rpm to obtain a slurry with a 45.0 wt% of solid content.

Coated electrodes, all featuring 89.5 wt% of LNMO, 6.0 wt% of carbon black, 2.0 wt% of polyacrylate binder and 2.5 wt% of CMC were prepared by casting the slurry on both sides of an Al foil current collector with a roll to roll coater (Basecoater, from Coatema GMBH) using a knife as coating head and predried in a three meter convection oven at 80°C for 6 min. The coated roll was calendered up to optimal electrode density (2.0 g cm⁻³; ca. 50% porosity for up to 5C power rate) using a roll press Calender Machine (LDHY400-N45 from Naknor). Rectangular electrodes (57.8 cm² geometric active area) with total mass loading in the range of 13.5 mg cm⁻² (1.6 mAh cm⁻²) were die cut.

### Anode preparation

Negative electrodes using artificial graphite powder from SGL Carbon featuring 94 wt% graphite, 2 wt% C45, 2% CMC, and 2 wt% SBR latex binder were prepared by coating on both sides of a Cu foil current collector in a roll to roll coating line. Anodic waterborne slurries with final solid content of 44.5 wt% were obtained using the mechanical mixer referred before at 600 rpm. The loading of the negative electrodes was 1.9 mAh/cm². Rectangular electrodes (61 cm² geometric active area) were cut after calendering to optimum density of 1.4 g cm⁻¹ using an automated die-cutting press (MSK-180-220V from MTI Corporation). All electrodes (positive and negative) were dried at 120 °C under dynamic vacuum in an oven for 16 h before cell assembly.

### Cell assembly

LNMO/graphite pouch cells with a stacked design and 1Ah nominal capacity were assembled. The pouch cells were composed of 6 cathodes (total active area, 693.8 cm²) and 7 anodes (854 cm²) and filled with an electrolyte based on 1M LiPF₆ in ethylene carbonate (EC): ethyl methyl carbonate (EMC) (3:7 w/w) with 2 wt% succinic anhydride (SOLVIONIC) and using a polyolefin separator (CELGARD 2015).

### Example 5 - Electrochemical characterization of LNMO/graphite pouch cell - 1Ah

The good electrochemical performance yielded with the electrodes from the slurry prepared in aqueous media in coin cell level allowed scaling up the methodology to pouch cell level.

Using the same parameters, electrodes for pouch cells were prepared. In order to have a capacity of 1 Ah, pouch cells composed of 6 cathodes and 7 anodes were assembled. Formation step, capacity check, OCV, power test, charge-discharge capability and cyclability tests were performed to these pouch cells for their electrochemical characterization.

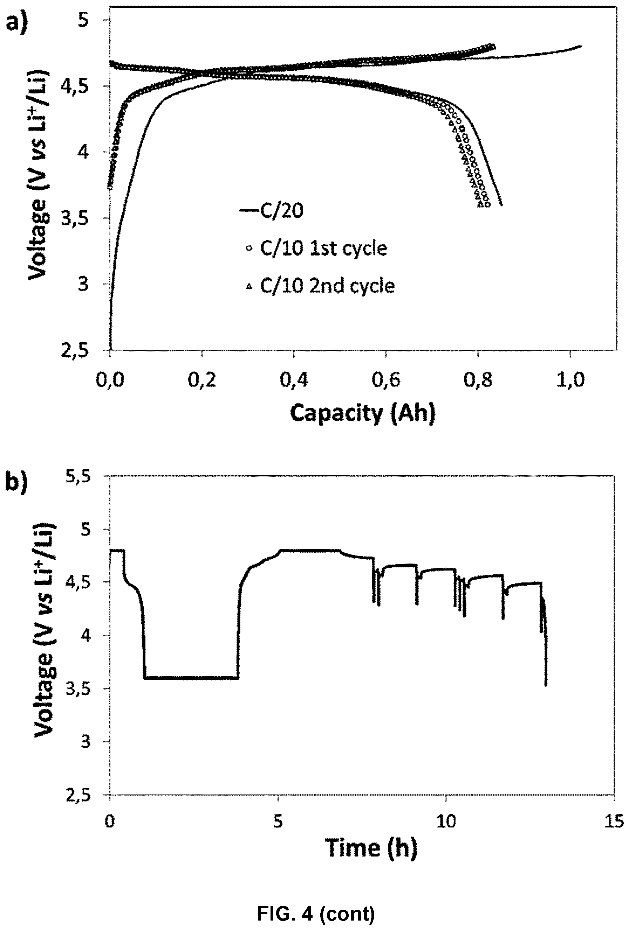

In the formation step (Figure 4a), some cycles at low rates (one at C/20 and two at C/10) were applied to the cells in order to have the first cycles at this relatively high voltage generating gases due to the electrolyte decomposition and formation of the SEI (Solid Electrolyte Interphase) layer on graphite anode. Thus, a degassing process was carried out in order to obtain the cell ready to be cycled without any limitation. An average capacity of 0.88 Ah and an internal resistance of 7.9 mΩ at 1 KHz were obtained.

In order to test the power of the pouch cell, pulses up to 3.425 A were applied for 30 s during the discharge, as can be seen in Figure 4b. These pulses caused a decay of the voltage to 4.32 V resulting in a power capability of 14.8 W. As cells weights were around 40 g, the cell power density was 350 W/kg.

Rate charge-discharge capability (Figure 4b) shows the stress that the high voltage and high energy density cell suffers upon cycling at high rates. Also, it can be seen comparing with the protocol (Table 3, showing the C-rate capability test with the respective cycles and intensity of the charge-discharge current rates as well as the charge and discharge capacity) that pouch cell capacity decreased dramatically at higher rates of discharge. However, after diminishing current rates of charge and discharge, cell recovered almost the initial capacity 0.8 Ah at 0.5C rate.

**Table 3**

| Cycle | Charge rate | Discharge rate | Charge capacity | Discharge capacity |
|---|---|---|---|---|
| 1 | 0,5 A | 1 A | 0,70 Ah | 0,60 Ah |
| 2 | 0,5 A | 2 A | 0,61 Ah | 0,19 Ah |
| 3 | 0,5 A | 3 A | 0,21 Ah | 0,11 Ah |
| 4 | 0,5 A | 4 A | 0,12 Ah | 0,10 Ah |
| 5 | 0,5 A | 5 A | 0,11 Ah | 0,10 Ah |
| 6 | 0,1 A | 1 A | 0,11 Ah | 0,62 Ah |
| 7 | 0,2 A | 1 A | 0,61 Ah | 0,60 Ah |
| 8 | 0,5 A | 1 A | 0,60 Ah | 0,59 Ah |
| 9 | 1A | 1 A | 0,60 Ah | 0,59 Ah |

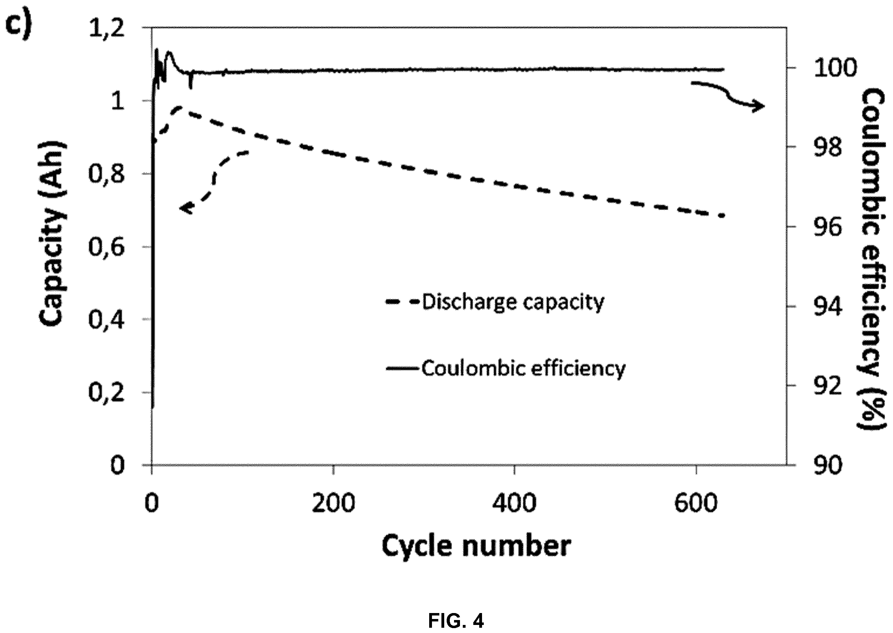

Initial irreversible capacity loss (ICL) of the cells was 15% (formation cycle) but following cyclability test at 0.5C showed a coulombic efficiency increase to 99% as shown in Figure 4c. The capacity was increasing upon cycling for 25 cycles due to recovery after power tests, showing a cycle-life of more than 500 cycles with 80% initial capacity retention.

### Citation List

1. Pieczonka et al. (J. Phys. Chem. C 117 (2013) 15947- 15957
2. Tanabe et al. (Electrochimica Acta, 258 (2017) 1348-1355
3. US9331331

## Claims

1. A process for the preparation of a cathode for a Li-ion battery comprising a conductive substrate in the form of a foil having two sides, wherein at least one of the two sides is coated with an active layer, wherein the active layer comprises an amount equal to or higher than 10 mg/cm² of a cathode active material, the process comprising:
a) preparing a first aqueous dispersion by dissolving from 2 to 3 wt% of water soluble thickener in water and then adding under stirring from 4 to 6 wt% of a conductive additive and;
b) adding from 89 to 91 wt% of a cathode active material to the first aqueous dispersion under stirring in order to obtain a second aqueous dispersion, wherein the cathode active material is LiNiₓMn₂₋ₓO₄ wherein x is selected from 0.2, 0.3, 0.4, and 0.5;
c) adding from 2 to 3 wt% of a waterborne polymer binder to the second dispersion under stirring in order to obtain a slurry;
d) coating with the slurry at least one side of the conductive substrate to obtain a coated conductive substrate; and
e) drying the coated conductive substrate in order to form an active layer on at least one side of the conductive substrate;
wherein the weight percentages are with respect to the total weight of water soluble thickener, conductive additive, cathode active material, and waterborne polymer binder;
wherein water added in steps (a), (b) and (c) is such that the slurry in step (c) has a final solid content from 40 to 55 wt%; and
wherein the cathode active material is in contact with water in both step b) and step c) for a time such that nickel is dissolved in an amount equal to or lower than 0.27 ppm, and manganese is dissolved in an amount equal to or lower than 0.14 ppm.

2. The process according to claim 1, wherein water added in steps (a), (b) and (c) is such that the slurry in step (c) has a final solid content from 45 to 50 wt%.

3. The process according to claims 1 or 2, wherein the amount of cathode active material is from 10 to 20 mg/cm²/side.

4. The process according to any one of claims 1 to 3, wherein steps (b) and (c) are carried out under stirring for a total of up to 4 hours.

5. The process according to any one of claims 1 to 4, wherein the waterborne polymer binder is selected from the group consisting of polyacrylate, polymethacrylate, fluorinated polyacrylate, poly-N, N-dimethylacrylamide, poly(acrylonitrile-co-acrylamide) polymer, polyacrylic acid (PAA), poly vinyl acetate (PVAc), polylactic acid (PLA), polysuccinic acid, polyformic acid, polyvinylsulfonic acid, fluorine acrylate binder, vinyl-acrylic copolymer, (meth)acrylic polymer binder, and copolymers and mixtures thereof or salts such as poly(acrylic acid sodium) (NaPAA), sodium polyacrylate, potassium polyacrylate, and lithium polyacrylate.

6. The process according to any one of claims 1 to 5, wherein the waterborne polymer binder is selected from the group consisting of polyacrylate, polymethacrylate, fluorinated polyacrylate, poly-N, N-dimethylacrylamide, poly(acrylonitrile-co-acrylamide) polymer, polyacrylic acid (PAA), fluorine acrylate binder, vinyl-acrylic copolymer, (meth)acrylic polymer binder, and copolymers and mixtures thereof or salts such as poly(acrylic acid sodium) (NaPAA), sodium polyacrylate, potassium polyacrylate, and lithium polyacrylate.

7. The process according to any one of claims 1 to 6, wherein the water soluble thickener is selected from the group consisting of polysaccharides such as chitosan, carboxymethyl chitosan, cellulose, sodium carboxymethyl cellulose, and sodium alginate; xanthan gum, guar gum, and gelatin.

8. The process according to any one of claims 1 to 7, wherein the weight ratio of a water soluble thickener to waterborne binder is from 0.6:1 to 1:1.5.

9. The process according to any one of claims 1 to 8, wherein the cathode active material is LiNi_{0.5}Mn_{1.5}O₄.

10. The process according to any one of claims 1 to 9, further comprising a step f) of calendering the active layer.

11. The process according to any one of claims 1 to 10, wherein the active layer has a density from 1.9 to 3.0 g/cm³.

12. A cathode obtainable by the process as defined in any one of claims 1 to 11.

13. A Li-ion battery comprising:
a) a cathode as defined in claim 12;
b) an anode;
c) a separator; and
d) a suitable electrolyte interposed between the cathode and the anode.

14. The Li-ion battery defined in claim 13, comprising from 4 to 33 cathodes, and the same number plus one anodes.

## Patentansprüche

1. Ein Verfahren zur Herstellung einer Kathode für eine Li-lonen-Batterie, die ein leitfähiges Substrat in Form einer Folie mit zwei Seiten umfasst, wobei mindestens eine der beiden Seiten mit einer aktiven Schicht beschichtet ist, wobei die aktive Schicht eine Menge von 10 mg/cm² oder höher eines kathodenaktiven Materials umfasst, wobei das Verfahren Folgendes umfasst:
a) Herstellen einer ersten wässrigen Dispersion, indem von 2 bis 3 Gew.-% eines wasserlöslichen Verdickungsmittels in Wasser gelöst werden und dann unter Rühren von 4 bis 6 Gew.-% eines leitfähigen Additivs zugegeben werden und;
b) Zugeben von 89 bis 91 Gew.-% eines kathodenaktiven Materials zu der ersten wässrigen Dispersion unter Rühren, um eine zweite wässrige Dispersion zu erhalten, wobei das kathodenaktive Material LiNiₓMn₂₋ₓO₄ ist, wobei x aus 0,2, 0,3, 0,4 und 0,5 ausgewählt ist;
c) Zugeben von 2 bis 3 Gew.-% eines wasserbasiertem Polymerbindemittels zu der zweiten Dispersion unter Rühren, um eine Aufschlämmung zu erhalten;
d) Beschichten mit der Aufschlämmung auf mindestens einer Seite des leitfähigen Substrats, um ein beschichtetes leitfähiges Substrat zu erhalten; und
e) Trocknen des beschichteten leitfähigen Substrats, um eine aktive Schicht auf mindestens einer Seite des leitfähigen Substrats zu bilden;
wobei die Gewichtsprozente in Bezug auf das gesamte Gewicht von wasserlöslichem Verdickungsmittel, leitfähigem Additiv, kathodenaktivem Material und wasserbasiertem Polymerbindemittel sind;
wobei das in den Schritten (a), (b) und (c) zugegebene Wasser so ist, dass die Aufschlämmung in Schritt (c) einen endgültigen Feststoffgehalt von 40 bis 55 Gew.-% hat; und
wobei das kathodenaktive Material sowohl in Schritt b) als auch in Schritt c) für eine solche Zeit mit Wasser in Kontakt steht, dass Nickel in einer Menge von gleich oder weniger als 0,27 ppm gelöst wird und Mangan in einer Menge von gleich oder weniger als 0,14 ppm gelöst wird.

2. Das Verfahren nach Anspruch 1, wobei das in den Schritten (a), (b) und (c) zugegebene Wasser so ist, dass die Aufschlämmung in Schritt (c) einen endgültigen Feststoffgehalt von 45 bis 50 Gew.-% hat.

3. Das Verfahren nach den Ansprüchen 1 oder 2, wobei die Menge an kathodenaktivem Material von 10 bis 20 mg/cm²/Seite beträgt.

4. Das Verfahren nach einem der Ansprüche 1 bis 3, wobei die Schritte (b) und (c) unter Rühren für insgesamt bis zu 4 Stunden durchgeführt werden.

5. Das Verfahren nach einem der Ansprüche 1 bis 4, wobei das wasserbasierte Polymerbindemittel ausgewählt ist aus der Gruppe bestehend aus Polyacrylat, Polymethacrylat, fluoriertem Polyacrylat, Poly-N,N-dimethylacrylamid, Polymer aus Poly(acrylnitril-co-acrylamid), Polyacrylsäure (PAA), Polyvinylacetat (PVAc), Polymilchsäure (PLA), Polysuccinsäure, Polyameisensäure, Polyvinylsulfonsäure, Fluoracrylatbindemittel, Vinyl-Acryl-Copolymer, (Meth)acrylpolymerbindemittel und Copolymeren und Mischungen davon oder Salzen wie z.B. Poly(acrylsäure-Natrium) (NaPAA), Natriumpolyacrylat, Kaliumpolyacrylat und Lithiumpolyacrylat.

6. Das Verfahren nach einem der Ansprüche 1 bis 5, wobei das wasserbasierte Polymerbindemittel ausgewählt ist aus der Gruppe bestehend aus Polyacrylat, Polymethacrylat, fluoriertem Polyacrylat, Poly-N,N-dimethylacrylamid, Polymer aus Poly(acrylnitril-co-acrylamid), Polyacrylsäure (PAA), Fluoracrylatbindemittel, Vinyl-Acryl-Copolymer, (Meth)acrylpolymerbindemittel und Copolymeren und Mischungen davon oder Salzen wie z.B. Poly(acrylsäure-Natrium) (NaPAA), Natriumpolyacrylat, Kaliumpolyacrylat und Lithiumpolyacrylat.

7. Das Verfahren nach einem der Ansprüche 1 bis 6, wobei das wasserlösliche Verdickungsmittel ausgewählt ist aus der Gruppe bestehend aus Polysacchariden wie z.B. Chitosan, Carboxymethylchitosan, Cellulose, Natriumcarboxymethylcellulose und Natriumalginat; Xanthangummi, Guargummi und Gelatine.

8. Das Verfahren nach einem der Ansprüche 1 bis 7, wobei das Gewichtsverhältnis eines wasserlöslichen Verdickungsmittels zu wasserbasiertem Bindemittel von 0,6:1 bis 1:1,5 beträgt.

9. Das Verfahren nach einem der Ansprüche 1 bis 8, wobei das aktive Kathodenmaterial LiNi_{0,5}Mn_{1,5}O₄ ist.

10. Das Verfahren nach einem der Ansprüche 1 bis 9, weiterhin umfassend einen Schritt f) des Kalandrierens der aktiven Schicht.

11. Das Verfahren nach einem der Ansprüche 1 bis 10, wobei die aktive Schicht eine Dichte von 1,9 bis 3,0 g/cm³ hat.

12. Eine Kathode, die durch das Verfahren wie in einem der Ansprüche 1 bis 11 definiert erhalten werden kann.

13. Eine Li-lonen-Batterie, umfassend:
a) eine Kathode wie in Anspruch 12 definiert;
b) eine Anode;
c) einen Separator; und
d) einen geeigneten Elektrolyten, der zwischen der Kathode und der Anode angeordnet ist.

14. Die Li-lonen-Batterie wie in Anspruch 13 definiert, umfassend von 4 bis 33 Kathoden und die gleiche Anzahl plus eine Anode.

## Revendications

1. Un procédé de préparation d'une cathode pour une batterie Li-ion comprenant un substrat conducteur sous la forme d'une feuille ayant deux côtés, dans lequel au moins l'un des deux côtés est revêtu d'une couche active, dans lequel la couche active comprend une quantité égale ou supérieure à 10 mg/cm² d'une matière active de cathode, le procédé comprenant :
a) préparer une première dispersion aqueuse en dissolvant dans l'eau de 2 à 3 % en poids d'épaississant soluble dans l'eau, puis en ajoutant sous agitation de 4 à 6 % en poids d'un additif conducteur et ;
b) ajouter de 89 à 91 % en poids d'une matière active de cathode à la première dispersion aqueuse sous agitation afin d'obtenir une seconde dispersion aqueuse, dans laquelle la matière active de cathode est LiNiₓMn₂₋ₓO₄ dans laquelle x est choisi parmi 0,2, 0,3, 0,4 et 0,5 ;
c) ajouter de 2 à 3 % en poids d'un liant polymère à base d'eau à la seconde dispersion sous agitation afin d'obtenir une suspension ;
d) revêtir avec la suspension au moins un côté du substrat conducteur pour obtenir un substrat conducteur revêtu ; et
e) sécher le substrat conducteur revêtu afin de former une couche active sur au moins un côté du substrat conducteur ;
dans lequel les pourcentages en poids sont par rapport au poids total d'épaississant soluble dans l'eau, d'additif conducteur, de matière active de cathode et de liant polymère à base d'eau ;
dans lequel l'eau ajoutée dans les étapes (a), (b) et (c) est telle que la suspension à l'étape (c) a une teneur finale en solides allant de 40 à 55 % en poids ; et
dans lequel la matière active de cathode est en contact avec de l'eau dans l'étape b) et dans l'étape c) pendant une durée telle que le nickel est dissous en une quantité égale ou inférieure à 0,27 ppm, et le manganèse est dissous en une quantité égale ou inférieure à 0,14 ppm.

2. Le procédé selon la revendication 1, dans lequel l'eau ajoutée dans les étapes (a), (b) et (c) est telle que la suspension dans l'étape (c) a une teneur finale en solides de 45 à 50 % en poids.

3. Le procédé selon les revendications 1 ou 2, dans lequel la quantité de matière active de cathode est de 10 à 20 mg/cm²/côté.

4. Le procédé selon l'une quelconque des revendications 1 à 3, dans lequel les étapes (b) et (c) sont effectuées sous agitation pendant un total allant jusqu'à 4 heures.

5. Le procédé selon l'une quelconque des revendications 1 à 4, dans lequel le liant polymère à base d'eau est choisi dans le groupe constitué par le polyacrylate, le polyméthacrylate, le polyacrylate fluoré, le poly-N,N-diméthylacrylamide, le polymère de poly(acrylonitrile-co-acrylamide), l'acide polyacrylique (PAA), le poly(acétate de vinyle) (PVAc), l'acide polylactique (PLA), l'acide polysuccinique, l'acide polyformique, l'acide polyvinylsulfonique, le liant d'acrylate de fluor, le copolymère de vinyle-acrylique, le liant de polymère (méth)acrylique, et les copolymères et mélanges de ceux-ci ou des sels tels que le poly(acide acrylique de sodium) (NaPAA), le polyacrylate de sodium, le polyacrylate de potassium et le polyacrylate de lithium.

6. Le procédé selon l'une quelconque des revendications 1 à 5, dans lequel le liant polymère à base d'eau est choisi dans le groupe constitué par le polyacrylate, le polyméthacrylate, le polyacrylate fluoré, le poly-N,N-diméthylacrylamide, le polymère de poly(acrylonitrile-co-acrylamide), l'acide polyacrylique (PAA), le liant d'acrylate de fluor, le copolymère de vinyl-acrylique, le liant de polymère (méth)acrylique, et les copolymères et mélanges de ceux-ci ou des sels tels que le poly(acide acrylique de sodium) (NaPAA), le polyacrylate de sodium, le polyacrylate de potassium et le polyacrylate de lithium.

7. Le procédé selon l'une quelconque des revendications 1 à 6, dans lequel l'épaississant soluble dans l'eau est choisi dans le groupe constitué par les polysaccharides tels que le chitosane, le carboxyméthylchitosane, la cellulose, la carboxyméthylcellulose de sodium et l'alginate de sodium ; la gomme de xanthane, la gomme de guar et la gélatine.

8. Le procédé selon l'une quelconque des revendications 1 à 7, dans lequel le rapport de poids d'un épaississant soluble dans l'eau au liant à base d'eau est de 0,6:1 à 1:1,5.

9. Le procédé selon l'une quelconque des revendications 1 à 8, dans lequel la matière active de cathode est LiNi_{0,5}Mn_{1,5}O_{4.}

10. Le procédé selon l'une quelconque des revendications 1 à 9, comprenant en outre une étape f) de calandrage de la couche active.

11. Le procédé selon l'une quelconque des revendications 1 à 10, dans lequel la couche active a une densité allant de 1,9 à 3,0 g/cm³.

12. Une cathode pouvant être obtenue par le procédé tel que défini dans l'une quelconque des revendications 1 à 11.

13. Une batterie Li-ion comprenant :
a) une cathode telle que définie dans la revendication 12 ;
b) une anode ;
c) un séparateur ; et
d) un électrolyte approprié interposé entre la cathode et l'anode.

14. La batterie Li-ion définie dans la revendication 13, comprenant de 4 à 33 cathodes, et le même nombre plus une anodes.
